# EUROPEAN PATENT APPLICATION

(11) **EP 4 845 198 A1**
(43) Date of publication of application: **25.11.2026**
(21) Application number: 25382502.0
(22) Date of filing: 19.05.2025
(51) Int. Cl.: H04W 24/02, H04L 41/12, H04W 16/18, H04W 24/06

(54) **GENERATING DIGITAL TWIN OF WIRELESS NETWORKS**

(71) Applicant: Nokia Solutions and Networks Oy, 02610 Espoo (FI)
(72) Inventor: Fernandez Duran, Alfonso, 28229 Madrid (ES); Fortes Rodriguez, Sergio, 29006 Malaga (ES); Pulido Alegre, Jose, 29190 Malaga (ES)
(74) Representative: Kolster Oy Ab

(57) **Abstract**

Disclosed is a method comprising: collecting radio measurement information and position information from a group of access points comprised in the wireless network, wherein the position information indicates a position of each access point comprised in the group of access points; determining, based on the radio measurement information, a positioning of a set of devices interacting with the group of access points; generating a digital twin representing a topology of the group of access points and the set of devices, wherein the digital twin is generated based at least on the radio measurement information collected from the group of access points, the position information collected from the group of access points, and the positioning of the set of devices; and evaluating, based at least on the digital twin, a performance of one or more access points from the group of access points.

## Description

### FIELD

The following example embodiments relate to wireless communication.

### BACKGROUND

As the demand for high-capacity and reliable wireless connectivity continues to grow, it is desirable to ensure optimal performance of wireless networks.

### SUMMARY

The scope of protection sought for various example embodiments is set out by the claims. The example embodiments and features, if any, described in this specification that do not fall under the scope of the claims are to be interpreted as examples useful for understanding various embodiments.

According to a first aspect, there is provided a method for maintaining replicated topology information of a wireless network for its improved operation, the method comprising: collecting radio measurement information and position information from a group of access points comprised in the wireless network, wherein the position information indicates a position of each access point comprised in the group of access points; determining, based on the radio measurement information, a positioning of a set of devices interacting with the group of access points; generating a digital twin representing a topology of the group of access points and the set of devices, wherein the digital twin is generated based at least on the radio measurement information collected from the group of access points, the position information collected from the group of access points, and the positioning of the set of devices; and evaluating, based at least on the digital twin, a performance of one or more access points from the group of access points.

According to a second aspect, there is provided the method of the first aspect, further comprising: collecting statistical information associated with multiple groups of access points comprised in the wireless network, wherein the statistical information comprises at least: a total number of access points per group of access points, and a number of statistical outliers per group of access points, wherein the number of statistical outliers indicates a number of access points with abnormal performance; and selecting, based on the statistical information, the group of access points from the multiple groups of access points.

According to a third aspect, there is provided the method of the second aspect, wherein the abnormal performance comprises at least one of: an observed channel noise with a statistically significant difference from an average channel noise of a corresponding group of access points, or an observed channel utilization ratio with a statistically significant difference from an average channel utilization ratio of the corresponding group of access points.

According to a fourth aspect, there is provided the method of the second or third aspect, wherein the selection of the group of access points comprises: selecting, from the multiple groups of access points, one or more groups of access points in which the total number of access points is above a threshold; sorting the one or more groups in descending or ascending order of the number of statistical outliers per group of access points; and selecting the group of access points from the one or more groups based on the sorting by prioritizing groups with a higher number of statistical outliers.

According to a fifth aspect, there is provided the method of any preceding aspect, wherein the set of devices comprises at least one or more terminal devices connected to at least one access point of the group of access points.

According to a sixth aspect, there is provided the method of the fifth aspect, wherein the set of devices further comprises at least one of: one or more other access points external to the wireless network, or one or more other terminal devices connected to the one or more other access points.

According to a seventh aspect, there is provided the method of the sixth aspect, further comprising: estimating a number of the one or more other terminal devices connected to the one or more other access points, wherein the estimation is based on an average number of terminal devices connected to all access points in the wireless network.

According to an eighth aspect, there is provided the method of any preceding aspect, wherein the determination of the positioning of the set of devices comprises: using an inverse of a propagation model to estimate, based on the radio measurement information, a distance between a given device of the set of devices and a given access point of the group of access points, wherein the radio measurement information indicates a received signal strength of a signal received by the given access point from the given device; and estimating a set of location coordinates of the given device based at least on the distance, wherein the estimation of the set of location coordinates comprises: estimating a first location coordinate of the set of location coordinates by selecting a value between zero and the distance; and estimating a second location coordinate of the set of location coordinates based on the distance and the first location coordinate.

According to a ninth aspect, there is provided the method of any of the first to seventh aspects, wherein the determination of the positioning of the set of devices comprises: using an inverse of a propagation model to estimate, based on the radio measurement information, a distance between a given device of the set of devices and a given access point of the group of access points, wherein the radio measurement information indicates a received signal strength of a signal received by the given access point from the given device; and estimating a set of location coordinates of the given device based at least on the distance, wherein the estimation of the set of location coordinates comprises: selecting a first value between zero and the distance; estimating a first location coordinate of the set of location coordinates by selecting a second value between the first value and an additive inverse of the first value; estimating a second location coordinate of the set of location coordinates based on the first value and the first location coordinate; and estimating a third location coordinate of the set of location coordinates based on the distance and the first value.

According to a tenth aspect, there is provided the method of the eighth or ninth aspect, wherein the determination of the distance comprises: obtaining, for the given access point, a mean received power value as a maximum between an average minimum received power value of all access points in the wireless network, and an average received power value of the given access point; obtaining, for the given access point, a standard deviation value as a maximum between an average deviation of received signal strength values of all access points in the wireless network, and a standard deviation of received signal strength values of the given access point; forming a random variable for the given access point based on the mean received power value and the standard deviation value, wherein the random variable represents the received signal strength; and using the inverse of the propagation model to produce a random variable representing the distance corresponding to the received signal strength.

According to an eleventh aspect, there is provided the method of any preceding aspect, further comprising: collecting traffic data from the group of access points; generating, based on the traffic data, per access point of the group of access points, one or more traffic models representative of data traffic patterns of the access point; assigning a traffic model from the one or more traffic models to the access point based on a traffic profile of the access point; and simulating the group of access points and the set of devices based on the digital twin and the traffic model assigned to each access point, wherein the one or more channel configurations are determined based on the simulation.

According to a twelfth aspect, there is provided the method of the eleventh aspect, wherein the traffic data comprises one or more traffic-related parameters for multiple different services, wherein the one or more traffic-related parameters comprise at least one of: an average packet size, an average packet rate, or an average data rate.

According to a thirteenth aspect, there is provided the method of any preceding aspect, further comprising: determining, based at least on the evaluation of the performance, one or more channel configurations to be applied to the one or more access points from the group of access points.

According to a fourteenth aspect, there is provided an apparatus comprising at least one processor, and at least one memory storing instructions that, when executed by the at least one processor, cause the apparatus at least to perform the method of any of the first to thirteenth aspects.

According to a fifteenth aspect, there is provided an apparatus comprising means for causing the apparatus to perform at least the method of any of the first to thirteenth aspects.

According to a sixteenth aspect, there is provided a computer program comprising instructions for performing at least the method of any of the first to thirteenth aspects. The computer program may be downloadable and is not restricted to instructions stored on a medium.

According to a seventeenth aspect, there is provided a computer program comprising instructions which, when executed by an apparatus, cause the apparatus to perform at least the method of any of the first to thirteenth aspects. The computer program may be downloadable and is not restricted to instructions stored on a medium.

According to an eighteenth aspect, there is provided a non-transitory computer readable medium comprising instructions stored thereon for performing at least the method of any of the first to thirteenth aspects.

According to a nineteenth aspect, there is provided a non-transitory computer readable medium comprising instructions which, when executed by an apparatus, cause the apparatus to perform at least the method of any of the first to thirteenth aspects.

According to a twentieth aspect, there is provided a computer readable medium comprising instructions stored thereon which, when executed by a processor, perform at least the method of any of the first to thirteenth aspects.

According to a twenty-first aspect, there is provided a computer program product comprising instructions that, when executed by a processor, perform at least the method of any of the first to thirteenth aspects.

### BRIEF DESCRIPTION OF THE DRAWINGS

In the following, various example embodiments will be described in greater detail with reference to the accompanying drawings, in which
FIG. 1 illustrates an example of a wireless local area network;
FIG. 2 illustrates a digital twin constructor system;
FIG. 3 illustrates a digital twin constructor process;
FIG. 4 illustrates a flow chart;
FIG. 5 illustrates a flow chart;
FIG. 6 illustrates a block diagram;
FIG. 7 illustrates a flow chart;
FIG. 8 illustrates a flow chart;
FIG. 9 illustrates an example of a normalized traffic profile;
FIG. 10 illustrates an example of a traffic generation approach; and
FIG. 11 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Further, it should be appreciated that, as used herein, the terms "the at least one" and "the one or more" mean "any one of the at least one" and "any one of the one or more", respectively. Furthermore, as used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

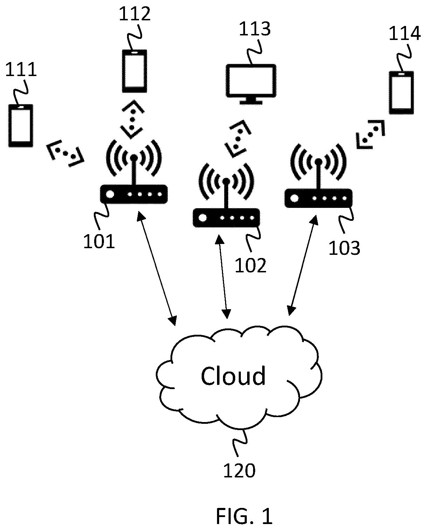

FIG. 1 illustrates a simplified example of a wireless local area network (WLAN). It is apparent to a person skilled in the art that the WLAN may also comprise other physical and logical entities than those shown in FIG. 1.

A WLAN is a type of wireless network based on the Institute of Electrical and Electronics Engineers (IEEE) 802.11 standards. WLANs use wireless communication (i.e., radio signals) to connect terminal devices 111, 112, 113, 114 within a limited area, such as a home, school, or office building. This allows users to move around within the coverage area while maintaining a network connection. A WLAN may include one or more wireless access points (APs) 101, 102, 103 for connecting one or more terminal devices 111, 112, 113, 114 to the internet (e.g., to the cloud 120). The terminal devices 111, 112, 113, 114 may also be referred to as stations (STAs).

A wireless access point 101, 102, 103 is a device that allows one or more terminal devices 111, 112, 113, 114 (e.g., laptops, personal computers, smartphones, tablet computers, printers, or home appliances) to connect to the wireless network. The wireless access point acts as a central transmitter and receiver of wireless radio signals, facilitating communication between the terminal devices and the internet, for example.

For example, Wi-Fi is one type of WLAN (but not all WLANs use Wi-Fi technology). In other words, WLAN refers to the general concept of a wireless local area network, while Wi-Fi is a specific implementation of that concept.

WLANs occupy a dominant position in the provision of wireless internet access. WLAN access points are widely and densely deployed in public places, offices and residential areas. However, there is a challenge in how to ensure that the deployed WLANs have enough capacity to meet the growing data traffic demands, given the significant increase in the amount of data traffic transmitted to and received from the internet.

Network operators may carry out network optimization based on indicators that reflect the state of the network in terms of lower layers within the overall communications scheme (e.g., data rate or throughput at the network level). However, current services and applications may provide information enriched by georeferenced data, user preferences and terminal measurements, thus generating large data sets that can be exploited for decision-making procedures, early fault detection, self-optimization, and even dedicated end-to-end (E2E) services from a user-centric perspective.

With respect to the data collected, its origin can be defined from both internal and external sources. Both sources may have structured information, which means that the data are generally organized in relational databases, as well as unstructured information that does not have a standard data format. The large amount of available data cannot be easily manipulated by human means. However, big data and artificial intelligence (AI) mechanisms (e.g., machine learning algorithms) may be used to process this raw data, and thus find schemes, patterns, variables and behaviors that are not possible to obtain with other techniques (e.g., manually).

However, the sole reliance on machine learning in wireless network environments without the support of a digital twin presents some drawbacks. For example, performing tests directly on the real operational network may lead to temporary performance degradation, because the improvement is not necessarily monotonic. Thus, these real-time adjustments and training may degrade the quality of service of the network.

A digital twin of a wireless network is a virtual model that replicates the architecture, components, and state of an actual wireless network. The digital twin may mirror the network's configuration and behavior, allowing for analysis, optimization, and prediction of network performance under various scenarios.

The formation of a digital twin of a physical system offers many possibilities. Interlinking the physical and digital systems through seamless data transfer allows the virtual system to exist simultaneously with the physical system. Real-time data communications between the physical and digital systems enable a synchronized and coherent operation of the real and virtual counterparts. In the digital domain, optimized learning, information transfer, analysis, visualization, optimization and planning can be incorporated to see the potential improvements with suggested changes (before applying the changes to the actual physical system). Thus, the digital twin can be used effectively to assess, observe and validate the physical system, suggest changes and visualize the potential improvements.

Incorporating a digital twin of a wireless network into an optimization system (e.g., a machine-learning-based optimization system) may help to address the above issues and improve network design and maintenance, due to the inherent complexity and dynamic nature of these infrastructures. The constant dynamism of networks requires real-time (or at least near-real-time) adaptability, and the digital twin (by replicating the network environment virtually) provides an accurate and up-to-date representation for instantaneous adjustments. In addition, the introduction of a digital twin enables optimization with less intrusion into the real physical network, as testing and adjustments can be carried out virtually prior to deployment in the physical environment, minimizing potential adverse impacts.

Internet of everything (IoE) applications have diverse requirements (e.g., regarding user experience, reliability, and latency). There is a need to provide new techniques to assist the wireless systems to meet the diverse requirements by enabling self-configuring wireless systems and proactive-online-learning-enabled systems.

Generally, wireless systems rely on intelligent, seamless, and ubiquitous connectivity for meeting the diverse requirements of end-users. To design a self-configuring and proactive-online-learning-enabled wireless system, a digital twin may be generated to represent the wireless system. The digital twin may enable IoE applications, for example. The digital twin may take inputs from the real world, and it may be used to make predictions and/or control decisions.

When building digital twins of wireless networks, a large amount of data may be collected through collaborating devices in order to reconstruct the controllable part of the network infrastructure and generate a digital twin accordingly. However, in practice, the majority of devices in the network may be non-collaborative. Building a reliable digital twin that includes non-collaborative devices may be beneficial in order to have scalability in large-scale networks. However, currently, there seem to be no solutions available to generate digital twins of wireless networks that also comprise non-collaborative devices.

A "collaborative device" refers to a device within the wireless network that actively participates in data collection and network management processes. For example, the collaborative devices may refer to controlled access points that provide detailed information about their operation and environment. The controlled access points may refer to access points that belong to a certain communications service provider (CSP).

A "non-collaborative device" refers to a device that does not actively participate in these processes, such as terminal devices, and/or other access points belonging to a different CSP, which do not provide detailed operational data. These other access points may also be referred to as aliens or non-controlled access points herein.

Some example embodiments provide a digital twin constructor for generating a digital twin of at least a part of a wireless network by also taking the non-collaborative devices into account. The constructor may obtain a set of average statistics from the network and generate the digital twin accordingly.

In an example embodiment, a group of APs from multiple groups of APs comprised in the wireless network may be selected using global data of each group (e.g., selecting groups with a size above a certain threshold, selecting groups that include elements with statistical anomalies, etc.). In this description, the terms "group" and "cluster" may be used interchangeably.

Data may be collected from collaborative devices (e.g., controlled access points) to provide information from themselves and the surrounding non-collaborative devices. Based on this information, the number of non-collaborative devices and the relationships with collaborative devices may be determined, and the corresponding characteristics and physical positions may be assigned to the non-collaborative devices. A traffic model may also be generated for the collaborative and non-collaborative devices to be used for simulating the devices with the digital twin.

When the resulting set of variables characterizing the collaborative and non-collaborative devices of the group are used in a network simulator, a digital twin of this part of the network may be obtained.

It should be noted that WLAN is just one example of a wireless network, and the embodiments are not limited to WLAN. A person skilled in the art may also apply the proposed concept to any other wireless communication networks or systems that are not centrally controlled and/or where resources are shared among different networks.

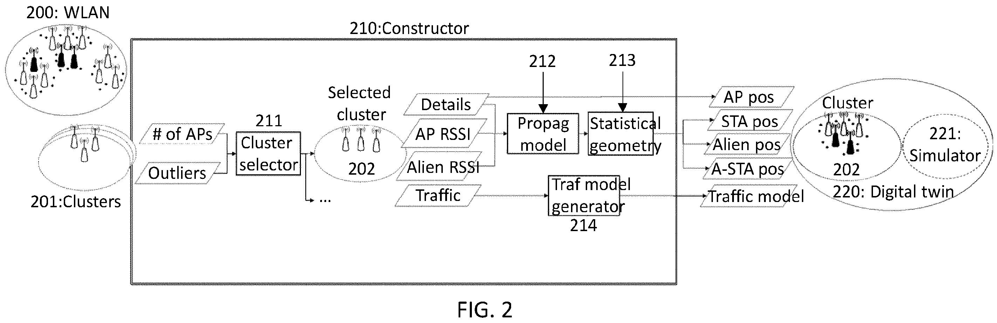

FIG. 2 illustrates an example embodiment of a digital twin constructor system 210. For example, the digital twin constructor system 210 may be comprised in a cloud computing platform 120.

In FIG. 2, the starting point may be a large-scale wireless network 200 including collaborative devices (controlled APs) from the accessible network, and non-collaborative devices from an external network. The wireless network 200 may be a WLAN or any other type of wireless network.

The controlled APs of the wireless network 200 may be divided into multiple groups (or clusters) 201. For example, an electromagnetic attenuation between each pair of wireless access points may be determined based on radio measurement information and/or position information collected from the access points. The electromagnetic attenuation between each pair of wireless access points may be compared to a pre-defined isolation threshold, wherein the pre-defined isolation threshold indicates a level of electromagnetic attenuation above which the pair of wireless access points is considered to be electromagnetically isolated from each other. The access points may then be grouped into multiple groups 201 based on the comparison and based on the pre-defined isolation threshold, such that the groups are considered to be electromagnetically isolated from each other (so that configuration changes applied to one group do not substantially degrade the performance of the neighboring groups).

From the controlled APs in the groups 201, statistical information such as the total number of APs (# of APs) per group and the number of statistical outliers per group may be extracted or collected. The number of statistical outliers indicates a number of access points with abnormal performance (e.g., abnormally high channel noise) within a given group.

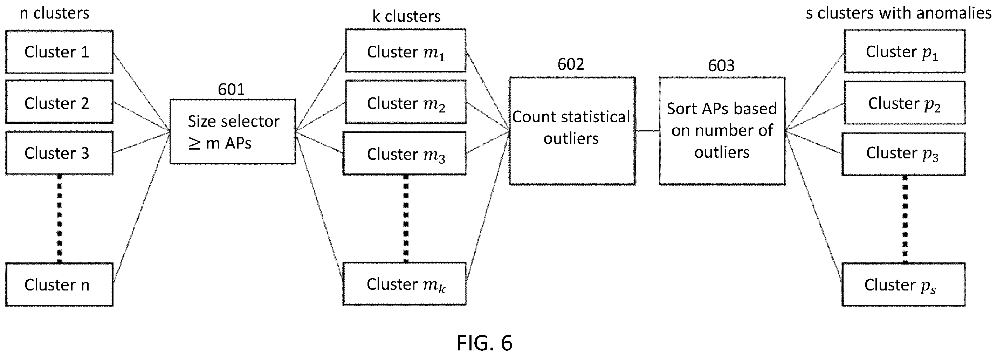

In block 211, based on the statistical information, a high-priority group 202 may be selected from the multiple groups 201 (e.g., as described below with reference to FIG. 6).

From the controlled APs of the high-priority group 202, average statistics (radio measurement information) may be obtained or collected to estimate the positions of the non-collaborative devices interacting (electromagnetically) with the group 202 (without requiring the direct collaboration of the non-collaborative devices). The radio measurement information may indicate, for example, a received signal strength of a signal received by a given controlled access point from a given non-collaborative device.

For example, an inverse of a propagation model 212 may be used to estimate, based on the radio measurement information, a distance between a given non-collaborative device and a controlled given access point of the group of access points. The propagation model 212 may also be referred to as a radio propagation model.

A radio propagation model may refer to a computational model configured to determine the electromagnetic attenuation as a function of the distance. Thus, the inverse of the radio propagation model determines the distance as a function of the electromagnetic attenuation (indicated by the radio measurement information).

In indoor areas, radio waves may propagate or attenuate differently depending on the specific building materials and structures. Thus, the propagation model may take into account the propagation effects of different building materials and the geometry of the building (statistically in the area of clustering), for example as defined in "Recommendation ITU-R P.2040-3 (08/2023) P Series: Radiowave propagation Effects of building materials and structures on radiowave propagation above about 100 MHz". The propagation model may also take into account the difference in altitude or height between two devices, as well as the building materials between the devices.

The location coordinates of the non-collaborative devices (STA pos, Alien pos, and A-STA pos in FIG. 2) may be estimated based at least on the distance, for example by applying statistical geometry. In FIG. 2, "STA pos" denotes the positions of the terminal devices (or stations) connected to the controlled APs. "Alien pos" denotes the positions of the non-controlled APs external to the wireless network. "A-STA pos" denotes the positions of the terminal devices connected to the non-controlled APs (aliens).

A non-controlled AP (alien) that is not in the group of access points may not necessarily report the terminal devices (alien STAs) connected to it, and the group of controlled access points may not see these terminal devices (alien STAs). In other words, the exact number of the terminal devices connected to the aliens may not be known. However, the number of alien STAs be estimated, for example, based on the average number of terminal devices connected to each controlled AP in the wireless network 200. The positions of the alien STAs may be estimated based on received signal strengths reported by the controlled APs (e.g., according to a statistical distribution).

The positions of the controlled APs ("AP pos" in FIG. 2) may be known based on the position information collected from the controlled APs, which indicates the position of each access point comprised in the high-priority group 202.

The constructor system 210 may perform transformations and conversions to generate the digital twin 220 of the selected group 202, wherein the digital twin also includes the non-collaborative devices.

In block 214, a network traffic model may be generated, which may be used for simulating the group of APs 202 and the non-collaborative devices in a network simulator 221 based on the digital twin 220 to evaluate the performance of one or more access points in the group 202.

The process described above may then be repeated for one or more additional groups of APs, such that a digital twin is generated for each group of APs.

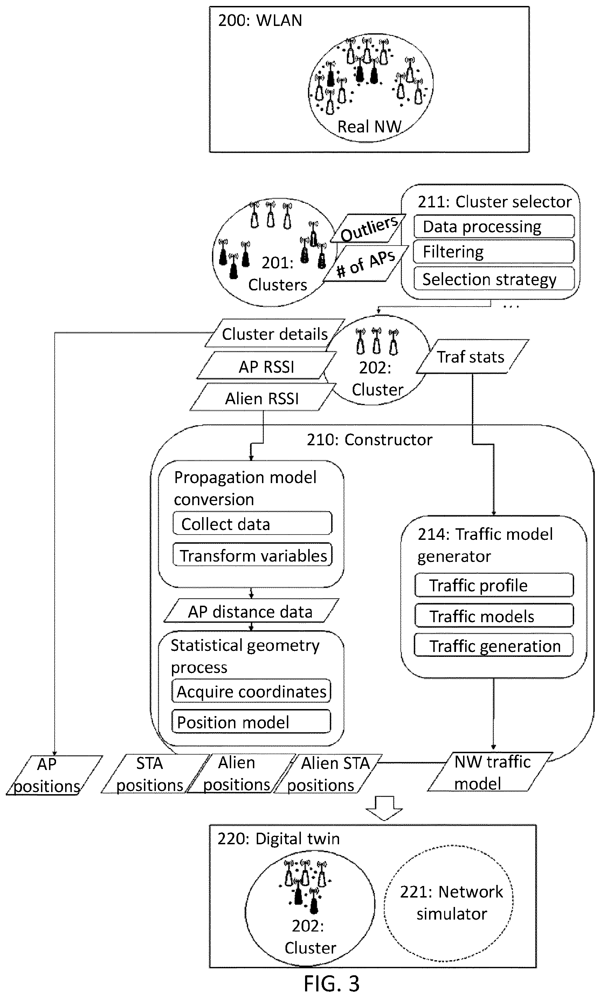

FIG. 3 illustrates a flow diagram of a digital twin constructor process according to an example embodiment. For example, the digital twin constructor process may be run in a cloud computing platform 120.

Statistical information including the number of outliers and the number of APs (# of APs) per group of APs is collected for each group of APs from multiple groups of APs 201 of the wireless network 200.

Referring to FIG. 3, in block 211, by following the filtering process described with reference to FIG. 6, the number of groups may be reduced considerably, so that the cluster selector 211 can select the candidate group 202 that can influence the improvement of the performance of the network 200 the most.

Once the group 202 is selected, radio measurement information and position information is extracted or collected from the controlled APs in the group 202 in order to reconstruct both the collaborative and non-collaborative devices in the group. The position information indicates a position (e.g., latitude, longitude, and/or altitude coordinates) of each access point comprised in the group 202.

In the constructor system 210, a conversion process is carried out by grouping the collected data and using an inverse propagation model together with a process of random variables to estimate, based on the radio measurement information, a distance between a given non-collaborative device and a given controlled access point of the group 202. Based on the distances, the location coordinates of the non-collaborative devices are obtained or estimated (e.g., by applying a statistical geometry process).

In block 214, based on traffic data collected from the controlled APs in the group 202, a traffic model is generated using, for example, the hourly traffic profile and data from different services.

With all this, a replica of the selected group 202 is built, which is converted into a digital twin 220 to be used together with a network simulator 221 to evaluate the performance of one or more APs in the group 202.

As mentioned above, a real wireless network (e.g., WLAN) may be made up of different elements: controlled access points, STAs (i.e., terminal devices associated with the controlled APs), aliens (i.e., non-controlled access points of external networks), and/or alien STAs (i.e., terminal devices associated with the non-controlled APs).

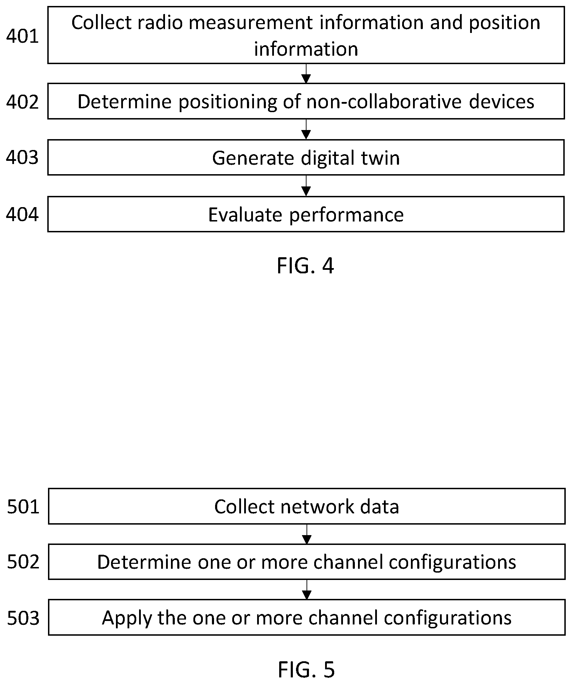

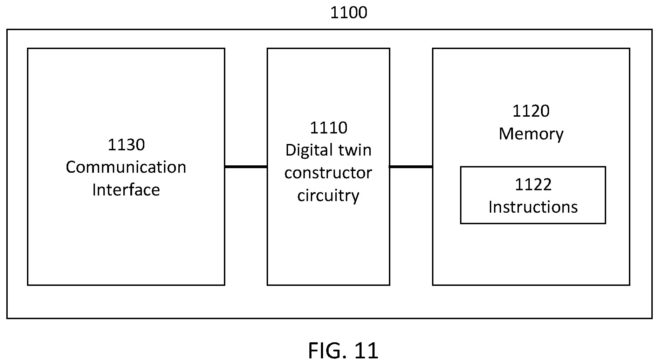

FIG. 4 illustrates a flow chart according to an example embodiment of a method (e.g., a computer-implemented method) for maintaining replicated topology information of a wireless network for its improved operation. The method of FIG. 4 may be performed in a cloud computing platform 120 (e.g., by the digital twin constructor 210) or by an apparatus 1100 depicted in FIG. 11. For example, the apparatus 1100 may be, or comprise, or be comprised in, a cloud server or any other computing device.

Referring to FIG. 4, in block 401, radio measurement information and position information is collected from a group of access points comprised in the wireless network, wherein the position information indicates a position of each access point comprised in the group of access points. The wireless network may be a wireless local area network (WLAN) or any other type of wireless network.

In case of a large network (e.g., if the network comprises multiple groups of access points), then the group of access points may be selected from the multiple groups as described below with reference to FIG. 6. Alternatively, in case of a small network (e.g., including 100 APs or less), then there may be no need to perform the selection, since in this case the network may reasonably fit into a single group or cluster.

In block 402, based on the radio measurement information, a positioning of a set of devices interacting (electromagnetically) with the group of access points is determined or estimated. The radio measurement information may indicate a received signal strength of a signal received by a given access point from a given device.

Herein the group of access points may refer to controlled access points, and the set of devices may refer to non-collaborative devices. For example, the set of devices may comprise at least one or more terminal devices (i.e., STAs) connected to at least one access point of the group of access points. The set of devices may further comprise at least one of: one or more other access points (i.e., aliens) external to the wireless network, or one or more other terminal devices (i.e., alien STAs) connected to the one or more other access points.

For example, the determination of the positioning of the set of devices may comprise: using an inverse of a propagation model to estimate, based on the radio measurement information, a distance between a given device of the set of devices and a given access point of the group of access points; and estimating a set of location coordinates of the given device based at least on the distance. For example, the inverse of the propagation model may be used to estimate the distance between a collaborative AP and an alien based on the RSSI of a radio signal received by the collaborative AP from the alien.

The set of location coordinates may comprise two-dimensional location coordinates (x, y) or three-dimensional location coordinates (x, y, z). As a first example, in case of two-dimensional location coordinates, the set of location coordinates of the given device (e.g., alien or alien STA) may be estimated or determined based at least on the distance (denoted as d) by applying a statistical geometry process as follows.

A first location coordinate (x) of the set of location coordinates may be estimated by selecting a value (e.g., a random number) between zero and the distance (d).

A second location coordinate (y) of the set of location coordinates may be estimated based on the distance (d) and the first location coordinate (x), for example as follows:$y = \sqrt{\left({d}^{2}-{x}^{2}\right)}$ where a positive or negative sign may be randomly assigned to y.

As a second example, in case of three-dimensional location coordinates (x, y, z), the set of location coordinates may be estimated by applying a statistical geometry process as follows.

A first value (denoted as k) may be selected as a random number between zero and the distance (or value thereof), where *k*² *= x*² *+ y*².

A first location coordinate (x) of the set of location coordinates may be estimated by selecting a second value between the first value and an additive inverse of the first value (i.e., between -k and k). In other words, the first location coordinate may correspond to the second value. The first location coordinate (second value) may be selected or generated as a random number between -k and k.

A second location coordinate (y) of the set of location coordinates may be estimated based on the first value (k) and the first location coordinate (x), for example as follows: $y = \sqrt{\left({k}^{2}-{x}^{2}\right)}$ where a positive or negative sign may be randomly assigned to y.

A third location coordinate (z) of the set of location coordinates may be estimated based on the distance (d) and the first value (k), for example as follows: $z = \sqrt{\left({d}^{2}-{k}^{2}\right)}$ where a positive or negative sign may be randomly assigned to z.

The second example may also be used to estimate two-dimensional location coordinates (x, y) by setting *k* = *d* (i.e., by setting *z* = 0). However, with the three-dimensional location coordinates, the estimation may be more accurate.

In block 403, a digital twin representing a topology of the group of access points and the set of devices is generated. The digital twin is generated based at least on the radio measurement information collected from the group of access points, the position information collected from the group of access points, and the positioning of the set of devices.

In block 404, based at least on the digital twin, the performance of one or more access points from the group of access points is evaluated based on the actual environment in which the real network is operating. For example, the performance may be evaluated by simulating the group of access points and the set of devices with the digital twin.

FIG. 5 illustrates a flow chart according to an example embodiment of a method for optimizing at least a part of a wireless network by utilizing a digital twin approach. The method of FIG. 5 may be performed following the method of FIG. 4. The method of FIG. 5 may be performed in a cloud computing platform or by an apparatus 1100 depicted in FIG. 11. For example, the apparatus 1100 may be, or comprise, or be comprised in, a cloud server or any other computing device.

Referring to FIG. 5, in block 501, network data is collected from the group of access points within the wireless network, wherein the network data comprises at least one of: performance information of the group of access points, the position information, or channel information indicating one or more channels used by the group of access points.

In block 502, one or more channel configurations are determined for (each AP of) the group of access points based at least on the network data and the digital twin of the group of access points (e.g., the digital twin generated in block 403). For example, the one or more channel configurations may be determined based at least on the evaluation of the performance performed in block 404.

The one or more channel configurations may be determined based further on channel pollution information indicative of: channel interference from one or more neighboring channels on the one or more channels used by the group of access points, and channel occupancy measured as signal power caused by the one or more other access points (aliens) on the one or more channels used by the group of access points.

The channel pollution information may be collected from the group of access points of the real wireless network. Alternatively, the channel pollution information may be generated by simulating the wireless network (or at least the group of access points and the set of devices).

In block 503, the one or more channel configurations are applied to one or more access points of the group of access points. For example, one channel configuration may be applied to each access point of the group of access points.

A channel configuration refers to the specific settings and parameters assigned to a wireless communication channel used by access point(s) within the wireless network. For example, the channel configuration may indicate the channel frequency, bandwidth, and possibly other related settings to optimize network performance and minimize interference. Proper channel configuration helps to ensure efficient use of the available spectrum, reduces congestion, and improves overall network reliability and speed.

FIG. 6 illustrates an example embodiment of a method for selecting the group of access points from multiple groups of access points (e.g., performed in block 211 of FIG. 2 or FIG. 3, or prior to the method of FIG. 4).

Initially, statistical information associated with the multiple groups of access points comprised in the wireless network may be collected, wherein the statistical information comprises at least: a total number of access points per group of access points, and a number of statistical outliers per group of access points, wherein the number of statistical outliers indicates a number of access points with abnormal performance.

For example, the abnormal performance may comprise at least one of: an observed channel noise with a statistically significant difference (e.g., at least two standard deviations away) from an average channel noise of a corresponding group of access points, or an observed channel utilization ratio with a statistically significant difference (e.g., at least two standard deviations away) from an average channel utilization ratio of the corresponding group of access points.

Since the total network may comprise a very large number of APs (e.g., millions of APs), it may be necessary to select just a subset of APs to be optimized. Therefore, a subset of APs (or a group of APs) may be selected and prioritized for optimization. Groups with a small number of APs have limited potential for optimization, and therefore the result from the optimization will most probably be marginal.

For this reason, in the size selector block 601, one or more groups (or clusters) in which the total number of access points per group is above a threshold (denoted as m in FIG. 6) are selected.

In FIG. 6, the total number of groups is denoted as n, and the number of groups selected in the size selector block 601 is denoted as k. The size selector 601 may produce a reduction of up to 90% in the number of target APs to k groups (e.g., from n=50000 groups to k=3000 groups including at least m=10 APs per group).

However, not all of the k groups necessarily have the same priority for optimization. For example, groups with more anomalous AP performance (as indicated by the statistical outliers) may be assigned with a higher priority, since optimizing these groups may result in a higher performance gain.

Therefore, in block 602, the number of statistical outliers (i.e., anomalies) in the performance metric(s) of each of the k groups is counted.

In block 603, the k groups are filtered to select only the groups with at least one statistical outlier, yielding s groups (e.g., s=900 groups out of the k=3000 groups). These s groups are sorted (e.g., in descending or ascending order) of the number of statistical outlier per group.

Once the groups are sorted, the one with the highest priority (highest number of statistical outliers) is selected and the group reconstruction process begins. In other words, based on the sorting, a group of access points is selected from the s groups by prioritizing groups with a higher number of statistical outliers, and a digital twin of the selected group is generated. In this way, the digital twins of the groups are generated in order of priority (by prioritizing groups with a higher number of statistical outliers), so that they will be processed depending on the computational resources available. This process may significantly reduce the computational load and minimize the changes applied to the real network, since generating a digital twin of a complete massive network may be complicated both computationally and in terms of time.

For instance, a real network with 1.1 million APs could have 1843 groups with more than 20 APs each, and 873 groups with at least one statistical outlier. In this case, there may be, for example, 1223 anomalies (statistical outliers) detected in the network to be corrected, for which it may be necessary to reconfigure a maximum of only 34927 APs (out of 1.1 million).

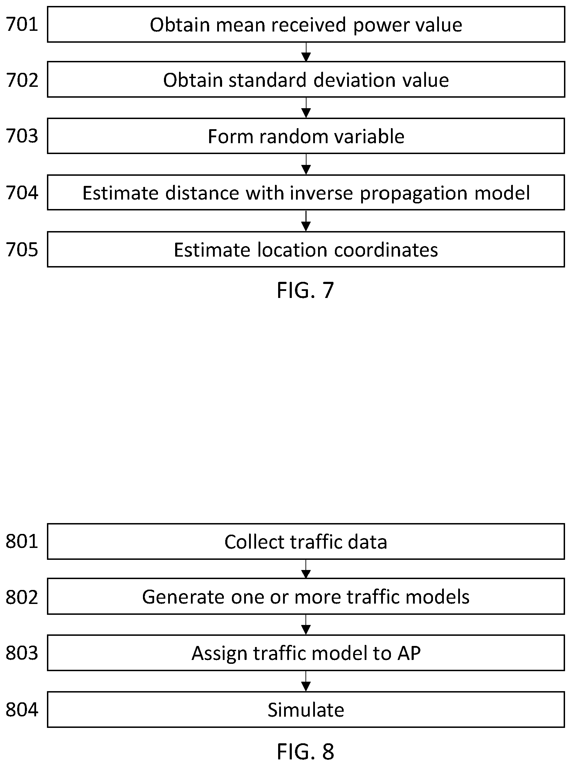

FIG. 7 illustrates a flow chart according to an example embodiment of a method (e.g., a computer-implemented method) for determining the positioning of the set of non-collaborative devices (e.g., in block 402 of FIG. 4). The method of FIG. 7 may be performed in a cloud computing platform 120 (e.g., by the digital twin constructor 210) or by an apparatus 1100 depicted in FIG. 11. For example, the apparatus 1100 may be, or comprise, or be comprised in, a cloud server or any other computing device.

Table 1 below presents an example of the information, such as the radio measurement information and the position information (X, Y, Z coordinates), collected from the group of controlled access points (e.g., in block 401 of FIG. 4). The radio measurement information may indicate, for example, a received signal strength of a signal received by a given controlled access point from a given non-collaborative device. For example, the received signal strength indicator (RSSI) may be used as a metric for the received signal strength.

In Table 1, the "ID" column comprises an identifier of a given controlled AP (i.e., each row after the top row in Table 1 represents a different AP). The X, Y, and Z columns comprise the location coordinates (longitude, latitude and altitude) of the AP. The "STAs" column comprises the number of terminal devices (i.e., STAs) connected to the AP. The "Interfaces" column comprises the number of communication interfaces of the AP. The "f" column indicates the operating frequency of the first interface of the AP in hertz (Hz). The "p" column indicates the transmit power of the AP. The "mean" column indicates the average received power value of the AP. The "std" column indicates the standard deviation of the received power values of the AP. The "min" column indicates the minimum (smallest) received power value of the AP. The "max" column indicates the maximum (largest) received power value of the AP.

**Table 1. Example of network radio statistics per AP in group.**

| ID | Address | X | Y | Z | STAs | Interfaces | f | p | mean | std | min | max |
|---|---|---|---|---|---|---|---|---|---|---|---|---|
| 0 | 00:00:00:00:00:01 | 8 | 1 | 2 | 6 | 1 | 2437 | 20 | -50 | 2 | -55 | -45 |
| 1 | 00:00:00:00:00:02 | 5 | 5 | 2 | 4 | 1 | 2437 | 20 | -55 | 3 | -60 | -50 |
| 2 | 00:00:00:00:00:03 | 11 | 6 | 2 | 2 | 2 | 2447 | 20 | -57 | 1 | -61 | -55 |
| 3 | 00:00:00:00:00:04 | 15 | 4 | 2 | 1 | 4 | 2462 | 15 | -55 | 2 | -55 | -55 |
| 4 | 00:00:00:00:00:05 | 25 | 3 | 2 | 5 | 2 | 2432 | 20 | -53 | 2 | -57 | -50 |
| 5 | 00:00:00:00:00:06 | 24 | 4 | 6 | 4 | 2 | 2437 | 20 | -51 | 7 | -57 | -42 |
| 6 | 00:00:00:00:00:07 | 21 | 7 | 6 | 7 | 2 | 2437 | 15 | -47 | 3 | -53 | -42 |
| 7 | 00:00:00:00:00:08 | 36 | 9 | 6 | 2 | 3 | 2447 | 20 | -45 | 4 | -50 | -40 |
| 8 | 00:00:00:00:00:09 | 42 | 2 | 6 | 3 | 4 | 2412 | 20 | -60 | 10 | -65 | -40 |
| 9 | 00:00:00:00:00:10 | 43 | 5 | 6 | 8 | 1 | 2412 | 15 | -70 | 2 | -72 | -65 |
| 10 | 00:00:00:00:00:11 | 45 | 2 | 6 | 2 | 2 | 2432 | 20 | -39 | 1 | -42 | -35 |

For the digital twin to be extensible to large-scale networks, it should be based on the position information indicating the positions of the APs and the statistical reports (e.g., radio measurement information) provided by them (see Table 1). Therefore, it is desirable to perform an accurate modeling of both the collaborative devices (i.e., the controlled APs) and the non-collaborative devices (i.e., STAs, aliens, and/or alien STAs). For this purpose, the following statistical approach may be performed, using the data reported by the controlled APs.

Referring to FIG. 7, in block 701, for a given access point, a mean received power value *µ_{Prx}* is obtained as a maximum between an average minimum received power value *µ_{Prxmin}* of all access points in the wireless network, and an average received power value *µₚᵣₓ* [*AP*] of the given access point: ${μ}_{Prx} = max \left({μ}_{Prxmin},{μ}_{prx}\left[AP\right]\right)$

In block 702, for the given access point, a standard deviation (std) value *σ_{Prx}* is obtained as a maximum between an average deviation value *σ_{Prxmean}* of received signal strength values of all access points in the wireless network, and a standard deviation value *σ_{Prx}*[*AP*] of received signal strength values of the given access point: ${σ}_{Prx} = max \left({σ}_{Prxmean},{σ}_{Prx}\left[AP\right]\right)$

This may help to avoid possible outliers in the report data.

In block 703, a random variable *Pᵣₓ* (e.g., a Gaussian random variable) is formed for the given access point based on the mean received power value and the standard deviation value, wherein the random variable represents the received signal strength.

The maximum and minimum received power values (*Prxₘₐₓ, Prxₘᵢₙ*) may be set as limits by adding and subtracting, respectively, the standard deviations of these received power values. A parameter denoted as *N* represents the total number of APs, and *n* is the number of terminal devices (i.e., STAs) associated with a given AP (the number of STAs may be reported by each controlled AP). The value *n* may be the actual number of STAs reported from the AP, or an average value in the group of APs (this solves the occasional circumstance of having APs with no STAs).

With all this, the Gaussian random variable *Pᵣₓ* may be formed for each AP, and *n* realizations may be obtained for each AP corresponding to the power received from each associated STA: $\left\{\begin{matrix}{Prx}_{N} ∼ N \left({μ}_{Prx}, {σ}_{Prx}^{2}\right) , {Prx}_{min} < {Prx}_{N} < {Prx}_{max} \\ {prx}_{1} , {prx}_{2} , {prx}_{3} , … , {prx}_{n}\end{matrix}\right.$

Once the random variable of the received power *Pᵣₓ* of each AP is obtained, an iterative technique may be used to solve the inverse of the indoor propagation model.

In block 704, the inverse of the propagation model is used to estimate, based on the radio measurement information, a distance between a given non-collaborative device of the set of devices (e.g., the terminal devices connected to the controlled APs) and a given controlled access point of the group of access points.

For example, the inverse of the propagation model may be used to produce a random variable representing the distance corresponding to the received signal strength. In this case, solving the inverse of the propagation model yields the random variable *D* representing the distances *d* corresponding to the signal strengths received from each STA corresponding to the *n* realizations of *d* as shown in the following: $\left\{\begin{matrix}D ∼ N \left({μ}_{D}, {σ}_{D}^{2}\right) \\ {d}_{1} , {d}_{2} , {d}_{3} , … , {d}_{n}\end{matrix}\right.$

In block 705, a set of location coordinates of the given device are determined or estimated based at least on the distance, for example by applying a statistical geometry process as described below. Alternatively, the set of location coordinates may be obtained or triangulated directly from the distances, if measurements from three or more known points (i.e., APs) are available (i.e., the statistical geometry process is not needed if the distances to at least three reference points are known). For example, the set of location coordinates may comprise a longitude coordinate (X-coordinate), a latitude coordinate (Y-coordinate), and possibly also an altitude coordinate (Z-coordinate) of each device.

From the *dₙ* realizations, the random variable of the X-coordinate may be obtained by adding some variability with a uniform random variable (*U*). Using the Pythagorean theorem, the random variable of the Y-coordinate may be obtained. This is shown in the following: $\left\{\begin{matrix}X = {d}_{n} ⋅ \left(U∼\left(0, 1\right)-0.5\right) ⋅ 2 \\ Y = \left(\sqrt{{D}^{2} - {X}^{2}}\right) ⋅ \pm 1\end{matrix}\right.$

The position of a given STA (*STA_{positionᵢ}*) may be modeled by adding the realizations of each X and Y coordinate to the position of the corresponding AP, as expressed in the following equation: $\left\{\begin{matrix}{STA}_{{position}_{i}} = \left({AP}_{{X}_{N}}+{x}_{i}, {AP}_{{Y}_{N}}+{y}_{i}\right) \\ i = 1 , 2 , 3 , … , n\end{matrix}\right.$

Furthermore, to estimate or model the position of the devices external to the network (i.e., the aliens and alien STAs), some data obtained through the APs may be taken into account, an example of which is shown in Table 2 below.

In Table 2, the ID column comprises the identifier of a given controlled AP (i.e., each row after the top row in Table 2 represents a different AP). The "min_alien_RSSI" comprises the minimum (smallest) signal strength received by the AP from the aliens. The "max_alien_RSSI" column comprises the maximum (largest) signal strength received by the AP from the aliens. The "Aliens" column comprises the number of aliens interacting with the AP (i.e., the number of aliens detected by the AP).

**Table 2. Example of statistics of aliens per AP in group.**

| ID | min_alien_RSSI | max_alien_RSSI | mean_alien_RSSI | Aliens |
|---|---|---|---|---|
| 0 | -54 | -34 | -50 | 6 |
| 1 | -62 | -50 | -55 | 15 |
| 2 | -63 | -53 | -57 | 11 |
| 3 | -57 | -50 | -52 | 9 |
| 4 | -47 | -41 | -53 | 10 |
| 5 | -44 | -35 | -51 | 12 |
| 6 | -33 | -28 | -47 | 7 |
| 7 | -40 | -31 | -45 | 5 |
| 8 | -45 | -38 | -60 | 3 |
| 9 | -60 | -52 | -70 | 8 |
| 10 | -32 | -32 | -32 | 1 |

With this data, the Gaussian random variable *Pᵣₓ* may be formed for each AP, and A realizations may be obtained for each AP corresponding to the power received from each alien observed by the AP. $\left\{\begin{matrix}{μ}_{{N}_{Prx}} = {RSSI}_{{mean}_{aliens}} \\ {σ}_{{N}_{Prx} = {RSSI}_{{std}_{aliens}}} \\ {RSSI}_{{max}_{aliens}} , {RSSI}_{{min}_{aliens}} \\ N = APs \\ A = Aliens \\ a = Aliens STAs\end{matrix}\right.$ $\left\{\begin{matrix}{Prx}_{N} ∼ N \left({μ}_{{N}_{Prx}}, {σ}_{{N}_{Prx}}^{2}\right) , {RSSI}_{{min}_{aliens}} < {Prx}_{N} < {RSSI}_{{max}_{aliens}} \\ {prx}_{1} , {prx}_{2} , {prx}_{3} , … , {prx}_{A}\end{matrix}\right.$

Following the same process described above for the STAs connected to the controlled APs, an iterative technique may be used to solve the inverse of the indoor propagation model. The random variable D is again obtained from the received powers of each alien corresponding to the A realizations of d as shown in the following: $\left\{\begin{matrix}D ∼ N \left({μ}_{D}, {σ}_{D}^{2}\right) \\ {d}_{1} , {d}_{2} , {d}_{3} , … , {d}_{A}\end{matrix}\right.$

From the *d_{A}* realizations, the random variable of the X-coordinate may be obtained. Using the Pythagorean theorem, the random variable of the Y-coordinate may be obtained. This is shown in the following: $\left\{\begin{matrix}X = {d}_{n} ⋅ \left(U∼\left(0, 1\right)-0.5\right) ⋅ 2 \\ Y = \left(\sqrt{{D}^{2} - {X}^{2}}\right) ⋅ \pm 1\end{matrix}\right.$

The position of the aliens may be modelled by adding the realizations of each X- and Y-coordinate to the position of the corresponding AP, as expressed in the following equation: $\left\{\begin{matrix}{Alien}_{{position}_{i}} = \left({AP}_{{X}_{A}}+{x}_{i}, {AP}_{{Y}_{A}}+{y}_{i}\right) \\ i = 1 , 2 , 3 , … , A\end{matrix}\right.$

On the other hand, the alien STAs may be modelled by taking the position of the aliens (non-controlled APs) as a reference and adding a uniform random variable (*U*) as uncertainty to position the alien STAs around the aliens: $\left\{\begin{matrix}Alien {STA}_{{position}_{j}} = \left({Alien}_{{X}_{A}}+{x}_{i}+U\left(min, max\right), {Alien}_{{Y}_{A}}+{y}_{i}+U\left(min, max\right)\right) \\ i = 1 , 2 , 3 , … , n \\ j = 1 , 2 , 3 , … , a\end{matrix}\right.$

Certain assumptions of received power (distance to the aliens) and a certain number of STAs associated to the aliens may be made for estimating the positioning of the alien

STAs. For example, the aliens may be designated with channels 1,6, and 11, which are the most used channels in the 2.4 GHz band, and 3 STAs may be assigned to each alien (in this case, 3 is the statistical average number of STAs per AP).

Joining the physical positioning of the collaborative and non-collaborative devices, together with the cluster characteristics and the models followed, the following lists (as examples) may be constructed for the digital twin with the APs, including the controlled and non-controlled APs (see Table 3), and the STAs, including the STAs connected to the controlled APs and the STAs connected to the non-controlled APs (see Table 4).

In Table 3, the X, Y and Z columns comprise the longitude, latitude, and altitude coordinates, respectively, of the APs (each row after the top row in Table 3 represents a different AP). The "chan" column comprises the channel used by the AP (e.g., channel 1, 6 or 11). The "Traf" column comprises an index representing the traffic profile associated with the AP (to be used for simulating the AP). The "Ptx" column comprises the transmit power of the AP in decibel-milliwatts (dBm). The "band" column comprises the frequency band (e.g., 2.4 GHz) that the AP is operating on. The "BW" column comprises the bandwidth of the AP in megahertz (MHz). The "alien" column comprises the number of non-controlled APs associated with or interacting with the AP. The "ID" column comprises the identifier of the AP.

**Table 3. Example of AP table.**

| X | Y | Z | chan | Traf | Ptx | Band | BW | Alien | ID |
|---|---|---|---|---|---|---|---|---|---|
| 8 | 1 | 2 | 6 | 0 | 20 | 2.4 | 20 | 0 | 0 |
| 5 | 5 | 2 | 1 | 1 | 20 | 2.4 | 20 | 0 | 1 |
| 11 | 6 | 2 | 11 | 2 | 20 | 2.4 | 20 | 0 | 2 |
| 15 | 4 | 2 | 1 | 3 | 15 | 2.4 | 20 | 0 | 3 |
| 25 | 3 | 2 | 6 | 2 | 20 | 2.4 | 20 | 0 | 4 |
| 24 | 4 | 6 | 11 | 1 | 20 | 2.4 | 20 | 0 | 5 |
| 4 | 2 | 2 | 1 | 0 | 20 | 2.4 | 20 | 1 | 20 |
| 7 | 1 | 2 | 6 | 1 | 20 | 2.4 | 20 | 1 | 21 |
| 10 | 3 | 2 | 11 | 2 | 20 | 2.4 | 20 | 1 | 22 |
| 12 | 4 | 2 | 1 | 2 | 20 | 2.4 | 20 | 1 | 23 |
| 20 | 2 | 2 | 6 | 1 | 20 | 2.4 | 20 | 1 | 24 |
| 21 | 1 | 6 | 11 | 3 | 20 | 2.4 | 20 | 1 | 25 |

In Table 4, the X, Y and Z columns comprise the longitude, latitude, and altitude coordinates, respectively, of the STAs (each row after the top row in Table 4 represents a different STA). The ID column indicates the AP that the STA is associated with. For example, the AP with the ID 0 has four STAs connected to or associated with it.

**Table 4. Example of STA table.**

| X | Y | Z | ID |
|---|---|---|---|
| 8 | 1 | 2 | 0 |
| 5 | 5 | 2 | 0 |
| 10 | 3 | 2 | 0 |
| 12 | 4 | 2 | 0 |
| 5 | 3 | 2 | 1 |
| 4 | 4 | 2 | 1 |
| 8 | 1 | 2 | 1 |
| 10 | 2 | 2 | 2 |
| 12 | 1 | 2 | 2 |
| 14 | 2 | 2 | 3 |
| 22 | 3 | 2 | 4 |
| 21 | 4 | 2 | 4 |
| 20 | 1 | 2 | 4 |
| 20 | 5 | 2 | 4 |
| 2 | 6 | 2 | 5 |
| 23 | 4 | 6 | 5 |
| 25 | 3 | 6 | 5 |
| 24 | 2 | 6 | 5 |
| 5 | 1 | 2 | 20 |
| 5 | 4 | 2 | 20 |
| 3 | 2 | 2 | 20 |
| 7 | 2 | 2 | 21 |
| 6 | 1 | 2 | 21 |
| 7 | 4 | 2 | 21 |
| 10 | 1 | 2 | 22 |
| 11 | 2 | 2 | 22 |
| 12 | 4 | 2 | 22 |
| 10 | 4 | 2 | 23 |
| 11 | 3 | 2 | 23 |
| 10 | 2 | 2 | 23 |
| 19 | 2 | 2 | 24 |
| 18 | 3 | 2 | 24 |
| 21 | 2 | 2 | 24 |
| 20 | 3 | 6 | 25 |
| 19 | 2 | 6 | 25 |
| 18 | 1 | 6 | 25 |

FIG. 8 illustrates a flow chart according to an example embodiment of a method (e.g., a computer-implemented method) for generating one or more traffic models (e.g., for evaluating the performance in block 404 of FIG. 4). The method of FIG. 7 may be performed in a cloud computing platform 120 (e.g., by the digital twin constructor 210) or by an apparatus 1100 depicted in FIG. 11. For example, the apparatus 1100 may be, or comprise, or be comprised in, a cloud server or any other computing device.

Referring to FIG. 8, in block 801, traffic data is collected from the group of access points. The traffic data comprises one or more traffic-related parameters for multiple different services. For example, the one or more traffic-related parameters may comprise at least one of: an average packet size, an average packet rate, or an average data rate.

In block 802, based on the traffic data, one or more traffic models representative of data traffic patterns of a given access point are generated per access point of the group of access points.

In block 803, a traffic model from the one or more traffic models is assigned to the given access point based on a traffic profile of the access point.

In block 804, the group of (controlled) access points and the set of non-collaborative devices are simulated based on the digital twin and the traffic model assigned to each access point. The one or more channel configurations may be determined based on the simulation (e.g., in block 502 of FIG. 5).

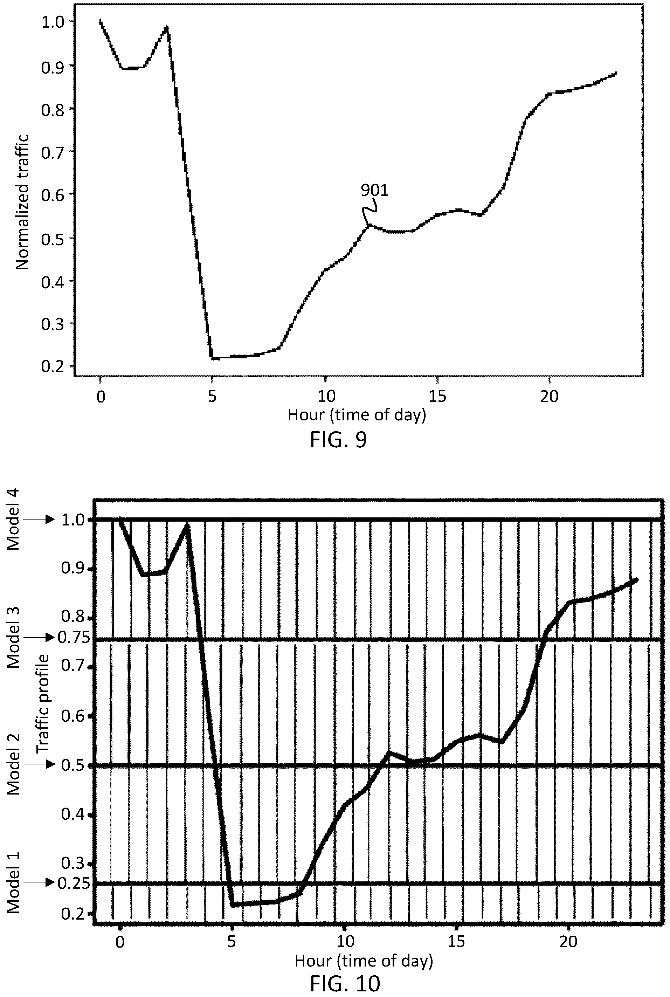

FIG. 9 illustrates an example of a normalized traffic profile 901, which may be used as a reference for generating the traffic. Using this hourly traffic profile, different hourly traffic patterns may be selected for the APs. For a given AP, changing the value of the 'Traf' column within the AP table (see Table 5 below) changes the traffic characteristics of the AP.

**Table 5. Example of AP table with traffic changes.**

| X | Y | Z | chan | Traf | Ptx | Band | BW | Alien | ID |
|---|---|---|---|---|---|---|---|---|---|
| 8 | 1 | 2 | 6 | 0 | 20 | 2.4 | 20 | 0 | 0 |
| 5 | 5 | 2 | 1 | 1 | 20 | 2.4 | 20 | 0 | 1 |
| 11 | 6 | 2 | 11 | 2 | 20 | 2.4 | 20 | 0 | 2 |
| 15 | 4 | 2 | 1 | 3 | 15 | 2.4 | 20 | 0 | 3 |
| 25 | 3 | 2 | 6 | 2 | 20 | 2.4 | 20 | 0 | 4 |
| 24 | 4 | 6 | 11 | 1 | 20 | 2.4 | 20 | 0 | 5 |

The traffic models represent various types of network traffic associated with different services, such as a video sharing platform, internet protocol television (IPTV), a video streaming service, cloud gaming, and extended reality. Each traffic model may be characterized by different data rates and packet sizes. The parameters that characterize each traffic may be collected in an approximate manner based on different studies carried out in this regard (see Table 6). In the 'Extended Reality' service, a certain packet size is exceeded, thus adapting to the maximum packet size established by the 802.11ax standard with aggregated medium access control protocol data unit (A-MPDU). In addition, the 'Cloud Gaming' service adjusts the rate to the average packet size to make more sense of the type of traffic. Also, video sharing platform, IPTV, and video streaming services may be included.

**Table 6. Example of traffic parameters per service.**

| Service | Average packet size (bytes) | Average packet rate (pps) | Average data rate (Mbps) |
|---|---|---|---|
| Video sharing platform | 1000 | 150 | 1.2 |
| IPTV | 900 | 350 | 2.5 |
| Streaming service | 1200 | 350 | 3.3 |
| Cloud gaming | (1100) 5000 | (2300) 500 | 20 |
| Extended reality | (55000) 10000 | (60) 500 | 40 |

Following the parameters defined for the different services, the different composite traffic models may be generated. The structure of the traffic models may be defined, for example, as follows:

```
                traf_models = {
                'model_1': {'Mbps': 5.7,'Pps': 650}, # 66% Video sharing platform, 33% Streaming
    service
                'model_2': {'Mbps': 7.8,'Pps': 1050}, # 66% Streaming service, 33% Video sharing
    platform
                'model_3': {'Mbps': 25.8,'Pps': 1200}, # 33% Cloud Gaming, 33% Streaming
    service, 33% IPTV
                'model_4': {'Mbps': 45.8,'Pps': 1200} # 33% Extended Reality, 33% Streaming
    service, 33% IPTV
                }
```

Once the traffic models have been defined, depending on the traffic profile, a specific traffic model is assigned to each AP (e.g., depending on the time of day of the simulation), so that a traffic model with more or less traffic may be selected for the AP. For this purpose, certain normalized values may be assigned to each traffic model, and these values may be compared with the value of the traffic profile at the time of day. Based on these comparative values, certain probabilities may be established for each AP to select one traffic model or another. This may be done, for example, as follows: ${S}_{N} = \frac{1}{\left|Traffic profile-Model value\right|}$ ${S}_{tot} = {\sum }_{i = 0}^{N} {S}_{i}$ ${Prob}_{N} = \frac{{S}_{N}}{{S}_{tot}} = \left\{{p}_{1},{p}_{2}…{p}_{N}\right\}$ ${M}_{k} = \left\{{model}_{1},{model}_{2}…{model}_{k}\right\}$ $P \left(M={model}_{k}\right) = {p}_{N}$ where *Traffic profile* is the value of the traffic profile at a certain time of the day, and *Model value* is the value assigned to each traffic model (e.g., in FIG. 6, *Model value =* {0.25, 0.5, 0.75, 1}). *N* is the total number of services or traffic models available, *S_{N}* is the closeness of the model values to a given traffic profile, and *Sₜₒₜ* is the sum of all these values in order to obtain the probabilities in *Prob_{N}* of selecting each model according to the given traffic profile. *P* is the specific probability of a given model.

FIG. 10 illustrates an example of the traffic generation approach. FIG. 10 shows how traffic is generated (or simulated) for each AP using the selected traffic models. This includes the data rate and packet rate for each traffic model.

The traffic profile helps in selecting the appropriate traffic model for each AP based on the time of day. The number of STAs connected to each AP influences the selection of the traffic models.

If an AP has more than 3 STAs associated with it, then a more demanding traffic model with a higher data rate and packet rate may be selected for that AP to reflect the higher demand. For example, if model 1 (with a data rate of 5.7 Mbps and a packet rate of 650 pps) would be selected when the AP has 3 STAs connected to it, then model 2 (with a data rate of 7.8 Mbps and a packet rate of 1050 pps) may be selected for that AP when it has more than 3 STAs connected to it.

With all this, the group (or cluster) is reconstructed with: the feature list of controlled APs and aliens, the feature list of STAs and alien STAs, and with the traffic profile together with the generated traffic models.

The blocks and related functions described above by means of FIGS. 2 to 8 are in no absolute chronological order, and some of them may be performed simultaneously or in an order differing from the described one. Other functions can also be executed between them or within them, and/or other rules applied. Some of the blocks or part of the blocks can also be left out or replaced by a corresponding block or part of the block.

FIG. 11 illustrates an example of an apparatus 1100 comprising means for performing one or more of the example embodiments described above (e.g., the method(s) of any of FIGS. 3 to 8). For example, the apparatus 1100 may be, or comprise, or be comprised in, a cloud server or any other computing device.

The apparatus 1100 may comprise, for example, a circuitry or a chipset applicable for realizing one or more of the example embodiments described above. The apparatus 1100 may be an electronic device or computing system comprising one or more electronic circuitries. The apparatus 1100 may comprise a digital twin constructor circuitry 1110 such as at least one processor, and at least one memory 1120 storing instructions 1122 which, when executed by the at least one processor, cause the apparatus 1100 to carry out one or more of the example embodiments described above. Such instructions 1122 may, for example, include computer program code (software). The at least one processor and the at least one memory storing the instructions may provide the means for providing or causing the performance of any of the methods and/or blocks described above.

The processor is coupled to the memory 1120. The processor is configured to read and write data to and from the memory 1120. The memory 1120 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1120 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1120 or, alternatively or additionally, they may be received, by the apparatus, via an electromagnetic carrier signal and/or may be copied from a physical entity such as a computer program product. Execution of the computer readable instructions causes the apparatus 1100 to perform one or more of the functionalities described above.

The memory 1120 may be implemented using any suitable data storage technology, such as semiconductor-based memory devices, flash memory, magnetic memory devices and systems, optical memory devices and systems, fixed memory and/or removable memory.

The apparatus 1100 may further comprise or be connected to a communication interface 1130 comprising hardware and/or software for realizing communication connectivity according to one or more communication protocols. The communication interface 1130 may comprise at least one transmitter (Tx) and at least one receiver (Rx) that may be integrated to the apparatus 1100 or that the apparatus 1100 may be connected to. The communication interface 1130 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1130 provides the apparatus with communication capabilities to communicate with the wireless network. The communication interface 1130 may, for example, provide a radio, cable or fiber interface to one or more access points of the wireless network.

It is to be noted that the apparatus 1100 may further comprise various components not illustrated in FIG. 11. The various components may be hardware components and/or software components.

As used in this application, the term "circuitry" may refer to one or more or all of the following: a) hardware-only circuit implementations (such as implementations in analog, digital and/or quantum circuitry); and b) combinations of hardware circuit(s) and software, such as (as applicable): i) a combination of analog, digital and/or quantum hardware circuit(s) with software/firmware and ii) any or all portions of hardware processor(s) (including digital and/or quantum processor(s)) with software, and memory(ies) that work together to cause an apparatus, such as a mobile device, computing device, or server, to perform various functions; and c) any or all portions of hardware circuit(s), such as microprocessor(s), processor(s) and/or quantum processor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be graspable to a person skilled in the art that, as technology advances, the proposed concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. A method for maintaining replicated topology information of a wireless network for its improved operation, the method comprising:
collecting radio measurement information and position information from a group of access points comprised in the wireless network, wherein the position information indicates a position of each access point comprised in the group of access points;
determining, based on the radio measurement information, a positioning of a set of devices interacting with the group of access points;
generating a digital twin representing a topology of the group of access points and the set of devices,
wherein the digital twin is generated based at least on the radio measurement information collected from the group of access points, the position information collected from the group of access points, and the positioning of the set of devices; and
evaluating, based at least on the digital twin, a performance of one or more access points from the group of access points.

2. The method of claim 1, further comprising:
collecting statistical information associated with multiple groups of access points comprised in the wireless network, wherein the statistical information comprises at least:
a total number of access points per group of access points, and
a number of statistical outliers per group of access points, wherein the number of statistical outliers indicates a number of access points with abnormal performance; and
selecting, based on the statistical information, the group of access points from the multiple groups of access points.

3. The method of claim 2, wherein the abnormal performance comprises at least one of:
an observed channel noise with a statistically significant difference from an average channel noise of a corresponding group of access points, or
an observed channel utilization ratio with a statistically significant difference from an average channel utilization ratio of the corresponding group of access points.

4. The method of claim 2 or 3, wherein the selection of the group of access points comprises:
selecting, from the multiple groups of access points, one or more groups of access points in which the total number of access points is above a threshold;
sorting the one or more groups in descending or ascending order of the number of statistical outliers per group of access points; and
selecting the group of access points from the one or more groups based on the sorting by prioritizing groups with a higher number of statistical outliers.

5. The method of any preceding claim, wherein the set of devices comprises at least one or more terminal devices connected to at least one access point of the group of access points.

6. The method of claim 5, wherein the set of devices further comprises at least one of:
one or more other access points external to the wireless network, or
one or more other terminal devices connected to the one or more other access points.

7. The method of claim 6, further comprising:
estimating a number of the one or more other terminal devices connected to the one or more other access points, wherein the estimation is based on an average number of terminal devices connected to all access points in the wireless network.

8. The method of any preceding claim, wherein the determination of the positioning of the set of devices comprises:
using an inverse of a propagation model to estimate, based on the radio measurement information, a distance between a given device of the set of devices and a given access point of the group of access points,
wherein the radio measurement information indicates a received signal strength of a signal received by the given access point from the given device; and
estimating a set of location coordinates of the given device based at least on the distance,
wherein the estimation of the set of location coordinates comprises:
estimating a first location coordinate of the set of location coordinates by selecting a value between zero and the distance; and
estimating a second location coordinate of the set of location coordinates based on the distance and the first location coordinate.

9. The method of any of claims 1 to 7, wherein the determination of the positioning of the set of devices comprises:
using an inverse of a propagation model to estimate, based on the radio measurement information, a distance between a given device of the set of devices and a given access point of the group of access points,
wherein the radio measurement information indicates a received signal strength of a signal received by the given access point from the given device; and
estimating a set of location coordinates of the given device based at least on the distance,
wherein the estimation of the set of location coordinates comprises:
selecting a first value between zero and the distance;
estimating a first location coordinate of the set of location coordinates by selecting a second value between the first value and an additive inverse of the first value;
estimating a second location coordinate of the set of location coordinates based on the first value and the first location coordinate; and
estimating a third location coordinate of the set of location coordinates based on the distance and the first value.

10. The method of claim 8 or 9, wherein the estimation of the distance comprises:
obtaining, for the given access point, a mean received power value as a maximum between an average minimum received power value of all access points in the wireless network, and an average received power value of the given access point;
obtaining, for the given access point, a standard deviation value as a maximum between an average deviation of received signal strength values of all access points in the wireless network, and a standard deviation of received signal strength values of the given access point;
forming a random variable for the given access point based on the mean received power value and the standard deviation value, wherein the random variable represents the received signal strength; and
using the inverse of the propagation model to produce a random variable representing the distance corresponding to the received signal strength.

11. The method of any preceding claim, further comprising:
collecting traffic data from the group of access points;
generating, based on the traffic data, per access point of the group of access points, one or more traffic models representative of data traffic patterns of the access point;
assigning a traffic model from the one or more traffic models to the access point based on a traffic profile of the access point; and
simulating the group of access points and the set of devices based on the digital twin and the traffic model assigned to each access point.

12. The method of claim 11, wherein the traffic data comprises one or more traffic-related parameters for multiple different services,
wherein the one or more traffic-related parameters comprise at least one of:
an average packet size,
an average packet rate, or
an average data rate.

13. The method of any preceding claim, further comprising:
determining, based at least on the evaluation of the performance, one or more channel configurations to be applied to the one or more access points from the group of access points.

14. An apparatus comprising at least one processor, and at least one memory storing instructions that, when executed by the at least one processor, cause the apparatus at least to:
collect radio measurement information and position information from a group of access points comprised in the wireless network, wherein the position information indicates a position of each access point comprised in the group of access points;
determine, based on the radio measurement information, a positioning of a set of devices interacting with the group of access points;
generate a digital twin representing a topology of the group of access points and the set of devices,
wherein the digital twin is generated based at least on the radio measurement information collected from the group of access points, the position information collected from the group of access points, and the positioning of the set of devices; and
evaluate, based at least on the digital twin, a performance of one or more access points from the group of access points.

15. A computer program comprising instructions for performing at least the following:
collecting radio measurement information and position information from a group of access points comprised in the wireless network, wherein the position information indicates a position of each access point comprised in the group of access points;
determining, based on the radio measurement information, a positioning of a set of devices interacting with the group of access points;
generating a digital twin representing a topology of the group of access points and the set of devices,
wherein the digital twin is generated based at least on the radio measurement information collected from the group of access points, the position information collected from the group of access points, and the positioning of the set of devices; and
evaluating, based at least on the digital twin, a performance of one or more access points from the group of access points.
